# FASCICULE DE BREVET EUROPEEN

(11) **EP 2 958 244 B1**
(45) Date de publication et mention de la délivrance du brevet: **07.12.2016**
(21) Numéro de dépôt: 15169731.5
(22) Date de dépôt: 28.05.2015
(51) Int. Cl.: H04B 1/7075, H04B 1/709, H04L 27/26, H04L 27/22

(54) **PROCÉDÉ DE DÉMODULATION AUTO-ADAPTATIVE DE SIGNAUX QUASI-ORTHOGONAUX, UNITÉ DE DÉMODULATION ET RÉCEPTEUR DE SIGNAUX RADIO**
AUTO-ADAPTIVES DEMODULATIONSVERFAHREN VON FAST ORTHOGONALEN SIGNALEN, DEMODULATIONSEINHEIT UND FUNKSIGNALEMPFÄNGER
AUTO-ADAPTIVE DEMODULATION METHOD FOR QUASI-ORTHOGONAL SIGNALS, DEMODULATION UNIT AND RADIO SIGNAL RECEIVER

(30) Priorité: 20.06.2014 FR 1455719
(43) Date de publication de la demande: 23.12.2015
(73) Titulaire: Commissariat à l'Énergie Atomique et aux Énergies Alternatives, 75015 Paris (FR)
(72) Inventeur: LENOIR, Vincent, 38100 Grenoble (FR); LATTARD, Didier, 38680 Rencurel (FR); LOMBARDI, Warody, 38000 Grenoble (FR)
(74) Mandataire: Brevalex

(56) Documents cités:
- EP-A1- 1 107 469
- US-A1- 2007 014 335

## Description

### DOMAINE TECHNIQUE

Le domaine de l'invention est celui des radiocommunications, et plus particulièrement celui de la démodulation de signaux radio modulés selon la technique d'étalement de spectre par séquence directe.

### ÉTAT DE LA TECHNIQUE ANTÉRIEURE

Le standard IEEE 802.15.4, qui définit notamment la couche physique du protocole basse consommation ZigBee destiné à être utilisé dans la bande ISM (« industriel, scientifique, et médical ») à 2450 MHz, repose sur la technique d'étalement de spectre par séquence directe pour transmettre les données, couplée à une modulation numérique de phase type O-QPSK (« *Offset Quadrature Phase Shift Keying* »).

Les informations à transmettre sont initialement sous la forme d'un flot de données binaire (bits). Ces bits sont groupés par 4 ce qui induit 16 combinaisons possibles, soit 16 symboles de données. Chacun de ces symboles est alors étalé sur 32 « chips » (bits de modulation) par une séquence d'étalement de spectre qui lui est propre et permet de différencier le symbole ainsi modulé des autres symboles de données du fait de la quasi-orthogonalité des séquences entre elles.

Ces symboles modulés sont transmis à l'émetteur radio après une modulation O-QPSK, les bits de modulation pairs étant sur la voie en phase I et les bits de modulation impairs sur la voie en quadrature Q du modulateur.

Par construction, les séquences de code d'étalement sont considérées quasiment orthogonales entre elles, c'est à dire que la corrélation de deux séquences différentes est quasi-nulle alors que celle de deux séquences identiques est élevée (égale à la somme du produit des bits modulés). Cette propriété permet donc de discerner facilement les séquences de code d'étalement et donc les symboles qui y sont associés. En outre, le standard IEEE 802.15.4 optimise la construction des séquences pour rendre leur génération et leur stockage simples. En effet, les 8 premières séquences parmi les 16 existantes sont construites par rotation de 4 bits de modulation de la séquence précédente. Les 8 dernières séquences sont construites par inversion des bits de modulation impairs des 8 premières. Il y a donc une certaine cohérence entre toutes les séquences d'étalement telles que définis par le standard.

La démodulation du signal radio reçu est basée sur la détection non-cohérente des séquences d'étalement de spectre, c'est à dire sans connaître la phase du signal, rendant le traitement moins complexe. Tout d'abord, le signal est synchronisé en temps et en fréquence. La synchronisation temporelle permet d'aligner la fenêtre de détection sur les symboles modulés reçus et de connaître la position optimale des échantillons sur le signal. Pour cela une corrélation glissante durant un préambule contenant 8 fois la séquence 0 permet de détecter via les pics de corrélation l'alignement parfait. À partir de cette information, le récepteur va ensuite échantillonner à raison de 1 échantillon par bit de modulation le signal reçu, soit 32 échantillons par symbole modulé reçu. La seconde étape de la synchronisation est l'estimation et la correction de l'écart de fréquence entre l'émetteur et le récepteur.

Une fois la synchronisation obtenue, le décodage d'un symbole consiste à corréler chaque symbole modulé reçu échantillonné par les 16 séquences existantes, équivalent à 16*32 corrélations niveau bit de modulation. La mesure du maximum de corrélation (dont on prend le module élevé au carré pour faire abstraction de la phase du signal modulé complexe) permet ensuite de connaître la séquence de modulation modulant le signal modulé reçu et donc quel symbole a été reçu. L'information est alors remise sous forme binaire comme elle l'était à l'émission.

Classiquement un récepteur radio est conçu pour fonctionner dans les pires conditions de transmission définies par le standard (bruit, atténuation lié aux pertes de propagations, brouilleurs). Or, cette situation n'est que rarement atteinte puisqu'elle représente un cas extrême. Par conséquent, le fonctionnement du récepteur est non-optimal la plupart du temps puisqu'il y a un surplus de calcul et de consommation vis-à-vis des performances imposées par le standard. Concrètement, dans le cas de la démodulation de signaux IEEE 802.15.4, ce problème peut être observé sur les niveaux de corrélation obtenus. En effet, la détection sans erreur est conditionnée par la distance séparant les deux maximums de corrélation parmi les 16 valeurs obtenues en testant chaque séquence.

Si un aléa tel que du bruit très fort comparé à l'orthogonalité entre les séquences apparaît, une erreur de détection peut se produire. Il est donc nécessaire de garantir un certain degré d'orthogonalité des séquences pour que dans la pire situation la distance entre les deux maximums soit suffisante afin de correctement discerner les séquences.

La marge de fonctionnement assurant une démodulation sans erreur est toutefois surévaluée la majeure partie du temps en raison de la variabilité de la qualité du signal, celle-ci n'étant pas toujours très mauvaise.

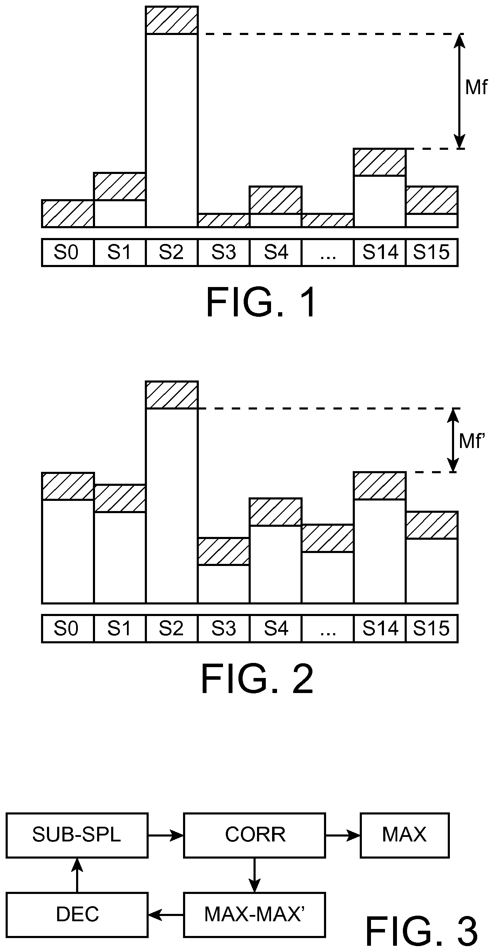

On a représenté sur la figure 1 les pics de corrélation observés pour chacune des 16 séquences de code d'étalement S0-S15. Le maximum de corrélation est observé pour la séquence S2, et le second pic, immédiatement inférieur au maximum de corrélation, est observé pour la séquence S14. Pour chacun des pics, une zone en noir représente la variation du niveau de corrélation en fonction du bruit. La marge de fonctionnement Mf correspond à la distance entre les deux maximums. Elle garantit une discrimination des deux pics immune aux aléas et à la variation de la puissance du signal reçu, à un taux d'erreur près.

On comprend de ce qui précède que le point de fonctionnement performance/consommation de la démodulation est figé pour assurer un fonctionnement correct dans le pire cas, ce qui engendre un surplus de calcul et de consommation par rapport aux performances requises et aux conditions effectives (qualité du signal reçu).

Afin de réduire la consommation, il a été proposé par le document US 2007/0014335 A1 de réaliser un sous-échantillonnage du signal reçu avant la démodulation. La corrélation d'un symbole de données avec une séquence d'étalement est alors une corrélation partielle réalisée pour seulement certains bits de modulation du symbole de données, par exemple seulement pour les M premiers bits de modulation. Le nombre M de bits de modulation retenus pour la corrélation partielle peut être modifié en fonction de la qualité du signal reçu, par exemple en venant augmenter ce nombre M jusqu'à ce que la valeur de corrélation maximale dépasse un seuil.

La demande de brevet EP 1107469 A1 décrit un procédé de décodage d'un symbole de données porté par un signal reçu par un récepteur d'un système de communication, le symbole de données étant modulé par une séquence de code d'étalement choisie parmi une pluralité de séquences de code d'étalement quasi-orthogonales entre elles pour différencier le symbole d'autres symboles de données, et reçu sous la forme d'un ensemble de bits de modulation, le procédé comprenant une étape de corrélation du symbole de données modulé reçu avec chacune de la pluralité de séquence de code d'étalement, et étant caractérisé en ce que l'étape de corrélation est précédée d'une étape de sous-échantillonnage du symbole de données modulé reçu pour y masquer un ou plusieurs des bits de modulation, de telle manière que l'étape de corrélation du symbole de données reçu sous-échantillonné n'est réalisée que pour les bits de modulation non masqués.

### EXPOSÉ DE L'INVENTION

L'invention vise à proposer une technique permettant d'adapter le point de fonctionnement performance/consommation de la démodulation pour minimiser les calculs et donc la consommation tout en garantissant globalement les mêmes performances en termes de taux d'erreur que la solution optimale mentionnée précédemment.

A cet effet, l'invention propose un procédé de décodage d'un symbole de données porté par un signal reçu par un récepteur d'un système de communication, le symbole de données étant modulé par une séquence de code d'étalement choisie parmi une pluralité de séquences de code d'étalement quasi-orthogonales entre elles pour différencier le symbole d'autres symboles de données, et reçu sous la forme d'un ensemble de bits de modulation,
le procédé comprenant :
une étape de corrélation du symbole de données modulé reçu avec chacune de la pluralité de séquence de code d'étalement ;
avant l'étape de corrélation, une étape de sous-échantillonnage du symbole de données modulé reçu pour y masquer un ou plusieurs des bits de modulation, de telle manière que l'étape de corrélation du symbole de données reçu sous-échantillonné n'est réalisée que pour les bits de modulation non masqués ;
le procédé étant caractérisé en ce qu'il comporte en outre le calcul de l'écart entre les deux plus grandes valeurs de corrélation obtenues à l'issue de l'étape de corrélation, et la modification ou non, en fonction dudit écart ou d'une valeur calculée à partir dudit écart, du nombre de bits de modulations masqués lors de l'étape de sous-échantillonnage.

Le fait de recourir à l'écart entre les deux plus grandes valeurs de corrélation pour décider de modifier ou non le nombre de bits de modulations masqués permet d'être sensible à différents paramètres qui peuvent influer sur la différence entre les deux maximums. Cette sensibilité permet de garantir de bonnes performances en termes de taux d'erreur, tout en minimisant la consommation.

Certains aspects préférés mais non limitatifs de ce procédé sont les suivants :
- il comprend en outre, suite à l'étape de corrélation, les étapes de :
   ∘ recherche du maximum de corrélation pour identifier celle de la pluralité de séquence de code d'étalement qui module le symbole de données modulé reçu ; et de
   ∘ décodage du symbole de données modulé reçu à partir de la séquence de code d'étalement identifiée ;
- la modification du nombre de bits masqués lors de l'étape de sous-échantillonnage comprend la sélection d'un masque de sous-échantillonnage parmi une pluralité de masques de sous-échantillonnage.

L'invention s'étend à une unité de démodulation configurée pour la mise en oeuvre de ce procédé, ainsi qu'à un récepteur intégrant une telle unité.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
- la figure 1, déjà discutée précédemment, est un exemple schématique représentant les pics de corrélation observés pour chacune des 16 séquences de code d'étalement S0-S15 dans le cadre d'un fonctionnement classique ;
- la figure 2 est un exemple schématique représentant les pics de corrélation observés pour chacune des 16 séquences de code d'étalement SO-S15 dans le cadre du fonctionnement dégradé selon l'invention ;
- la figure 3 est un organigramme illustrant les différentes étapes d'un procédé de décodage selon un mode de réalisation possible de l'invention ;
- la figure 4 est un schéma d'une boucle de rétroaction pouvant être mise en oeuvre pour maintenir un taux d'erreur binaire cible en venant automatiquement adapter le nombre de bits de modulation à masquer;
- les figures 5 et 6 sont des schémas d'unités de démodulation selon deux modes de réalisation possible de l'invention ;
- la figure 7 illustre le principe de l'invention d'adaptation aux conditions réelles du point de fonctionnement performance/consommation.

### EXPOSÉ DÉTAILLÉ DE MODES DE RÉALISATION PARTICULIERS

L'invention concerne un procédé de décodage d'un symbole de données porté par un signal reçu par un récepteur d'un système de communication. L'invention s'étend également à une unité de démodulation d'un récepteur pour système de communication configurée pour permettre la mise en oeuvre de ce procédé de décodage.

Dans le cadre de l'invention, le symbole de données reçu par le récepteur est modulé par une séquence de code d'étalement choisie parmi une pluralité de séquences de code d'étalement quasi-orthogonales entre elles pour différencier le symbole d'autres symboles de données. Il est reçu sous la forme d'un ensemble de bits de modulation.

L'invention s'applique en particulier, mais non exclusivement, à un étalement de spectre par séquence directe (DSSS : « *Direct Sequence Spread Spectrum* »), répondant au standard IEEE 802.15.4^{™}-2011. En particulier, l'invention n'est pas limitée à la modulation O-QPSK préconisée par ce standard, son principe restant valable quel que soit le type de transmission dès lors que la démodulation repose sur la différenciation d'une pluralité de séquences orthogonales par corrélation

La description suivante repose sur ce standard. Mais l'invention n'est bien entendu pas limitée à cette implémentation particulière. Ainsi on prend uniquement à titre d'exemple illustratif dans ce qui suit une modulation côté émetteur qui utilise 16 séquences de code d'étalement différentes pour différencier 16 symboles correspondant chacun à 4 bits de données. Chacun de ces symboles est étalé sur 32 bits de modulation par une séquence d'étalement de spectre qui lui est propre pour former un symbole modulé qui est alors transmis sur le canal de communication de l'émetteur vers le récepteur.

Côté récepteur, et au sein d'une unité de démodulation, le symbole modulé reçu est soumis à une opération de corrélation avec chacune des 16 séquences de code d'étalement. Dans la mesure où une séquence de code d'étalement prend typiquement la forme d'une séquence pseudo-aléatoire de 1 et de -1, l'opération de corrélation fournissant un maximum permet d'identifier la séquence de code d'étalement modulant le symbole codé reçu. En effet, dans la mesure où 1 x 1 = 1 et -1 x -1 = 1, la somme de la multiplication de chacun des bits de modulation du symbole modulé reçu avec les bits de modulation correspondant d'une séquence de code d'étalement de référence fournit un maximum (égal à 32 avant élévation au carré) lorsqu'il s'agit de la séquence modulant le symbole. A contrario, lorsque l'on corrèle deux séquences différentes, la somme des +1 et de -1 se compense quasiment.

Dans le cadre de l'invention, le procédé de décodage comprend une étape, mise en oeuvre avant la corrélation du symbole de données modulé reçu avec chacune de la pluralité de séquence de code d'étalement, de sous-échantillonnage du symbole de données modulé reçu pour y masquer un ou plusieurs des bits de modulation. De telle manière, l'étape de corrélation n'est réalisée que pour les bits de modulation non masqués du symbole de données reçu sous-échantillonné.

L'invention propose ainsi de réduire dans la corrélation des symboles modulés reçus le nombre de bits de modulation pris en compte. Cette réduction prend la forme d'un sous-échantillonnage conduisant au total à moins de 1 échantillon par bit de modulation. Il est alors possible d'effectuer un nombre variable de corrélations niveau bit de modulation pour décoder un symbole, allant de 1 à 32.

L'impact de ce mécanisme de masquage de certains bits de modulation pour les exclure de l'opération de corrélation est une diminution de l'orthogonalité entre les séquences de code d'étalement, ce qui diminue intrinsèquement la marge de fonctionnement. En effet, d'une part le maximum de corrélation sera plus faible en raison d'une séquence plus courte (norme du signal plus petite) et d'autre part la quasi-orthogonalité des séquences sera moins nette, rendant la corrélation de deux séquences différentes largement non-nulle. En contrepartie de cette dégradation du fonctionnement optimal, un nombre réduit d'opérations est réalisé, ce qui permet de diminuer la consommation. Par ailleurs, comme cela sera détaillé ci-après, cette dégradation peut être réalisée tout en maîtrisant le niveau de performance de manière à respecter un taux d'erreur imposé.

On a ainsi représenté sur la figure 2 les pics de corrélation observés dans le cadre de l'invention pour chacune des 16 séquences de code d'étalement SO-S15. Le maximum de corrélation est observé pour la séquence S2, et le second pic, immédiatement inférieur au maximum de corrélation, est observé pour la séquence S14. On constate une marge de fonctionnement Mf' entre les deux maximums réduite par rapport à la marge Mf de la figure 1.

Pour quantifier le sous-échantillonnage, on définit un taux correspondant au rapport entre le nombre de bits de modulation effectivement utilisés et le nombre total de bits de modulation dans une séquence, soit 32 dans l'exemple ici retenu. Un sous-échantillonnage à un taux de 50 %, par exemple, équivaut à dire que seulement la moitié des bits de modulation reçus est prise en compte lors de la corrélation.

En outre, la position des bits de modulation masqués peut être choisie de manière aléatoire afin d'être le moins cohérent possible avec la structure des séquences d'étalement définies par le standard. Cela évite par exemple de confondre deux codes complémentaires qui sont uniquement différents du fait de leurs bits de modulation impairs. En effet, un taux de sous-échantillonnage de seulement 50 % pourrait rompre complétement l'orthogonalité de ces séquences d'étalement deux à deux si les bits de modulation impairs étaient masqués. Cette sélection aléatoire des bits de modulation à masquer permet en outre d'être plus générique qu'une sélection par troncature, cette dernière n'étant effectivement fonctionnelle que dans le cas du standard IEEE 802.15.4^{™}-2011.

Le procédé selon l'invention comprend en outre suite à l'étape de corrélation, les étapes de recherche du maximum de corrélation pour identifier celle de la pluralité de séquence de code d'étalement qui module le symbole de données modulé reçu, et de décodage du symbole de données modulé reçu à partir de la séquence de code d'étalement identifiée.

Dans le cadre de l'invention, on vient en outre ajuster dynamiquement la marge de fonctionnement Mf' afin de minimiser les calculs et donc la consommation tout en garantissant les mêmes performances en termes de taux d'erreur. Pour ce faire, le procédé comprend, à l'issue de l'étape de corrélation, le calcul de l'écart entre les deux plus grandes valeurs de corrélation, et la modification ou non, en fonction dudit écart ou d'une valeur calculée à partir dudit écart, du nombre de bits de modulations masqués lors de l'étape de sous-échantillonnage qui sera appliquée au symbole modulé reçu suivant dans le flot de données reçu par le récepteur.

L'écart entre les deux plus grandes valeurs de corrélation fournit la marge de fonctionnement Mf'. L'intérêt de cette mesure est multiple car elle permet d'être sensible à différents paramètres qui peuvent influer sur la différence entre les deux maximums. Cette mesure englobe en effet le niveau de bruit, la qualité de la synchronisation temporelle, la qualité de la synchronisation fréquentielle, l'orthogonalité entre les séquences et l'intensité du signal reçu (équivalente à l'amplitude des échantillons).

La modification du nombre de bits de modulation masqués peut être basée sur la valeur instantanée de la marge de fonctionnement Mf' ou encore sur une moyenne de la marge de fonctionnement correspondant à la démodulation de plusieurs symboles modulés successivement reçus. La décision de modification peut reposer sur un tableau de configurations préétablies ou encore reposer sur un traitement algorithmique.

La modification du nombre de bits de modulation masqués lors de l'étape de sous-échantillonnage peut être une augmentation du nombre de bits masqués lorsque ledit écart ou la valeur calculée à partir dudit écart est supérieur à un seuil et une réduction du nombre de bits masqués lorsque ledit écart ou la valeur calculée à partir dudit écart est inférieur à un seuil. En particulier, en fonction de la marge mesurée, une décision est prise pour dégrader les performances de la démodulation, c'est-à-dire pour augmenter le nombre de bits masqués, jusqu'à une limite de fonctionnement nominal, c'est-à-dire un taux d'erreur imposé.

La figure 3 illustre de manière schématique les différentes étapes du procédé selon l'invention avec boucle de reconfiguration utilisant la mesure de la marge de fonctionnement Mf'. On retrouve ainsi l'étape de corrélation « CORR » et l'étape de recherche du maximum de corrélation « MAX » permettant de décoder le symbole modulé reçu. Le résultat de l'étape de corrélation « CORR » est également utilisé lors de l'étape de calcul « MAX-MAX' » de l'écart entre les deux plus grandes valeurs de corrélation. Une décision de reconfiguration « DEC » est prise en fonction du résultat du calcul « MAX-MAX' », et vient commander la réalisation de l'étape de sous-échantillonnage « SUB-SPL » d'un symbole modulé reçu avant la corrélation « CORR ».

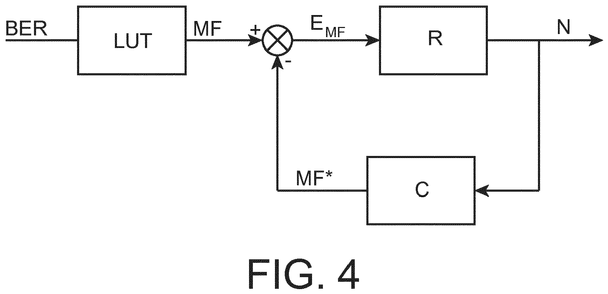

La décision de modification peut être mise en oeuvre de manière à assurer un taux d'erreur binaire cible. En référence à la figure 4, une régulation en boucle fermée peut pour cela être implémentée qui permet d'adapter automatiquement le nombre N de bits de modulation à masquer afin de respecter le taux d'erreur binaire cible BER.

Le taux d'erreur cible BER est converti en une marge de fonctionnement cible MF, par exemple au moyen d'une table de correspondance LUT. Une mesure de la marge de fonctionnement réelle MF* est soustraite de la marge de fonctionnement cible MF par un soustracteur qui fournit en sortie une erreur de marge de fonctionnement E_{MF}.

Cette erreur E_{MF} est fournie en entrée d'un régulateur R configuré pour fournir en sortie le nombre N de bits de modulation à masquer. Le régulateur est par exemple du type intégral. Le masquage de N bits de modulation se traduit par la marge de fonctionnement réelle MF*, dont la mesure est obtenue à travers le corrélateur C dont l'expression peut prendre la forme d'un simple gain.

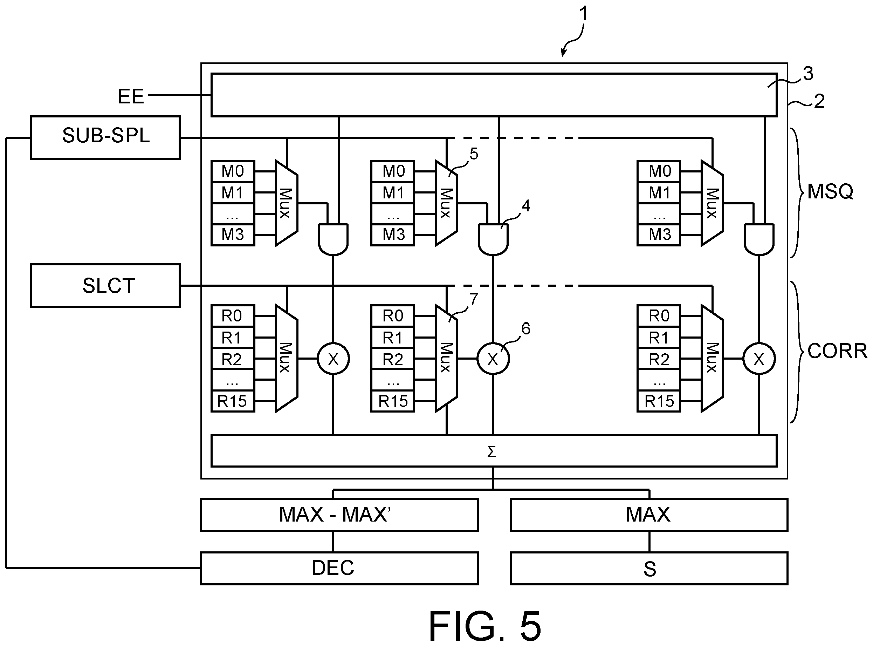

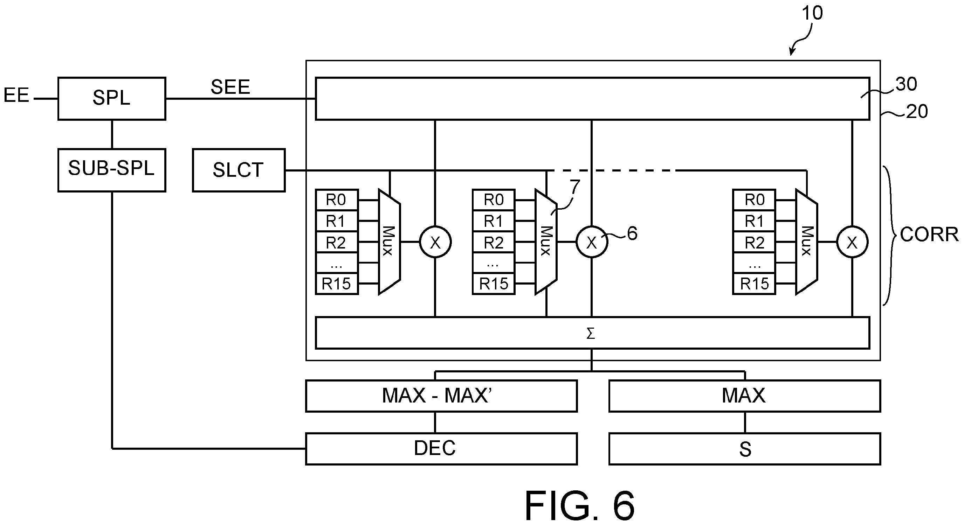

On a représenté sur les figures 5 et 6 deux exemples de réalisation d'une unité de démodulation destinée à être intégrée dans un récepteur de signaux de radio et configurée pour mettre en oeuvre le procédé précédemment décrit. Sur ces figures, les différents modules de cette unité portent les références des différences étapes de la figure 3 qu'ils mettent en oeuvre.

L'unité de démodulation 1 de la figure 5 exploite un corrélateur de code de taille fixe 2, et un sous-échantillonnage des bits de modulation d'un symbole modulé reçu intégré au corrélateur de code 2. Le corrélateur de code 2 reçoit les échantillons du signal radio EE et stocke dans un registre de taille fixe 3 les 32 échantillons du signal radio correspondant aux 32 bits de modulation d'un symbole modulé reçu. Le corrélateur de code 2 présente 32 canaux de traitement en parallèle, chaque canal comprenant un étage de masquage MSQ d'un bit de modulation suivie d'un étage de corrélation CORR avec un bit correspondant de chacune des séquences de code d'étalement.

L'étage de masquage MSQ comprend une porte logique ET 4 ayant deux entrées : une première entrée reliée à une case mémoire du registre 3 et sur laquelle on retrouve un bit de modulation du symbole modulé reçu, et une deuxième entrée reliée à la sortie d'un multiplexeur 5, dit de masquage, et sur laquelle on retrouve un niveau logique 0 ou 1 selon que le bit de modulation doit être masqué ou non. Le multiplexeur de masquage 5 dispose de plusieurs entrées M0-M3 correspondant à différents masques de sous-échantillonnage décrivant quels bits de modulation sont à masquer et ainsi écarter de la corrélation. Ainsi la seconde entrée de la porte ET 4 est reliée, via le multiplexeur 5, à des cases mémoires de registres stockant les masques de sous-échantillonnage. Le multiplexeur 5 est commandé par un module de sélection du sous-échantillonnage SUB-SPL indiquant celui des masques qui doit être utilisé. La sortie de la porte ET 4 est reliée à l'étage de corrélation CORR. Un niveau logique 0 constant sur cette sortie vient inhiber la corrélation du bit de modulation correspondant.

L'étage de masquage MSQ forme ainsi avec le module de sélection du sous-échantillonnage SUB-SPL un étage de sous-échantillonnage en amont de l'étage de corrélation CORR, le registre de taille fixe 3 étant agencé en amont de cet étage de sous-échantillonnage.

L'étage de corrélation CORR comprend un multiplicateur 6 ayant pour entrées d'une part la sortie de la porte ET 4 et d'autre part la sortie d'un multiplexeur 7 dit de corrélation ayant pour entrées un bit de modulation de chacune des séquences de code d'étalement R0-R15. Le multiplexeur de corrélation 7 est commandé par un module SLCT configuré pour balayer successivement, et en parallèle sur les différents canaux, les 16 séquences M0-M16.

Ainsi, lors de l'étape de corrélation du symbole de données reçu sous-échantillonné, la corrélation avec l'une de la pluralité de séquences de code d'étalement consiste à ne réaliser une multiplication d'un bit de modulation du symbole de données reçu sous-échantillonné avec un bit de modulation correspondant de la séquence de code d'étalement que pour les bits de modulation non masqués. Ne sont ainsi utilisés que les multiplicateurs associés aux bits non masqués, ce qui diminue le nombre de calculs (réduction correspondant au nombre de bits masqués fois le nombre de séquences de code d'étalement) et donc la consommation.

La sortie de chacun des 32 multiplicateurs 8 est fournie à un additionneur Σ. la sortie de l'additionneur est délivrée à un module MAX chargé de rechercher le maximum de corrélation parmi les 16 séquences balayées. Lorsque le signal est complexe, comme c'est le cas avec la modulation O-QPSK préconisée par le standard IEEE 802.15.4, le carré du module est pris en considération pour cette recherche. Une fois ce maximum identifié, un module S réalise le décodage du symbole modulé reçu. La sortie de l'additionneur est également fournie à un module MAX-MAX' chargé de calculer la marge de fonctionnement. La marge de fonctionnement ainsi calculée alimente un module DEC chargé de prendre une éventuelle décision de reconfiguration, laquelle décision est ensuite transmise au module de sélection du sous-échantillonnage SUB-SPL.

Les différents masques de sous-échantillonnage M0-M3 présentent de préférence différents taux d'échantillonnage, par exemple 100%, 75%, 50% et 25%, ce qui permet une reconfiguration de l'unité de démodulation selon différents points de fonctionnement possibles. Lors de la définition de ces masques, les bits de modulation devant être masqués sont de préférence choisis de manière aléatoire comme indiqué précédemment.

L'unité de démodulation 10 de la figure 6 exploite quant à elle un corrélateur de code de taille variable 20, et un sous-échantillonnage des bits de modulation d'un symbole modulé réalisé à l'extérieur du corrélateur de code par un échantillonneur SPL. L'échantillonneur SPL reçoit les échantillons du signal radio EE et les sous-échantillonne sous commande d'un module de sélection du sous-échantillonnage SUB-SPL conforme à celui de la figure 5. L'échantillonneur SPL peut être propre à l'unité de démodulation 10. Il peut également être placé au niveau de la conversion analogique-numérique de la chaîne de réception du récepteur. L'échantillonneur SPL et le module de sélection du sous-échantillonnage SUB-SPL forment l'étage de sous-échantillonnage, ici non intégré au corrélateur de code.

Dans cette réalisation les bits de modulation masqués sont éliminés dès l'échantillonnage, à la volée. Le masque de sous-échantillonnage sélectionné est lu progressivement en même temps que les échantillons du signal radio EE afin de savoir s'il faut ou non échantillonner les bits de modulation du symbole modulé reçu. Les séquences de code d'étalement R0-R15 sont par ailleurs sous-échantillonnées de la même manière.

Les bits de modulation non masqués SEE sont fournis au corrélateur de code de taille variable 20 qui les stocke dans un registre de taille variable 30. Le corrélateur de code 20 ne comporte ici qu'un étage de corrélation CORR ayant un nombre variable de canaux en parallèle et réalisant la corrélation des bits de modulation sous-échantillonnés avec chacune des 16 séquences de code d'étalement sous-échantillonnées. Dans ce mode de réalisation, le registre de taille variable est intercalé entre l'étage de sous-échantillonnage SUB-SPL, SPL et l'étage de corrélation CORR.

Les autres éléments de l'unité de démodulation de la figure 6 sont identiques à ceux de la figure 5 et ne sont pas décrits plus en avant.

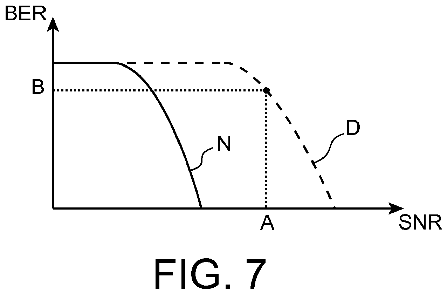

On a représenté sur la figure 7 le taux d'erreur binaire BER en fonction du ratio signal à bruit SNR pour le cas d'un fonctionnement non dégradé (courbe N) et dans le cas d'un fonctionnement dégradé conforme à l'invention (courbe D). On comprend aisément que pour respecter un taux d'erreur B lorsque le ratio signal à bruit est égal à A, il est préférable, à performance constante, de privilégier le fonctionnement dégradé qui s'accompagne d'une réduction de consommation plutôt que le fonctionnement non dégradé. L'invention trouve ainsi avantageusement application dans les réseaux de capteurs sans fil, et d'une manière plus générale dans l'Internet des objets où la question de la consommation apparaît primordiale.

L'invention n'est pas limitée au procédé tel que précédemment décrit, mais s'étend également à une unité de démodulation configurée pour mettre en oeuvre ce procédé, et en particulier à une unité de démodulation d'un symbole de données reçu par un récepteur d'un système de communication, le symbole de données étant modulé par une séquence de code d'étalement choisie parmi une pluralité de séquences de code d'étalement quasi-orthogonales entre elles pour différencier le symbole d'autres symboles de données, et reçu sous la forme d'un ensemble de bits de modulation, l'unité comprenant une étage de corrélation du symbole de données modulé reçu avec chacune de la pluralité de séquence de code d'étalement, et étant caractérisée en ce qu'elle comporte en amont de l'étage de corrélation un étage de sous-échantillonnage du symbole de données modulé reçu configurée pour masquer un ou plusieurs des bits de modulation, de telle manière que la corrélation du symbole de données reçu sous-échantillonné n'est réalisée que pour les bits de modulation non masqués.

L'unité de démodulation peut comprendre un registre de taille fixe en amont de l'étage de sous-échantillonnage pour l'enregistrement des bits de modulation du symbole modulé reçu. Alternativement, elle peut comprendre un registre de taille variable intercalé entre l'étage de sous-échantillonnage et l'étage de corrélation pour l'enregistrement des bits de modulation non masqués du symbole modulé reçu.

L'invention s'étend également à un récepteur pour système de communication comprenant une telle unité de démodulation.

## Revendications

1. Procédé de décodage d'un symbole de données porté par un signal reçu par un récepteur d'un système de communication, le symbole de données étant modulé par une séquence de code d'étalement choisie parmi une pluralité de séquences de code d'étalement (R0-R15) quasi-orthogonales entre elles pour différencier le symbole d'autres symboles de données, et reçu sous la forme d'un ensemble de bits de modulation,
le procédé comprenant :
une étape de corrélation (CORR) du symbole de données modulé reçu avec chacune de la pluralité de séquence de code d'étalement (R0-R15) ;
avant l'étape de corrélation, une étape de sous-échantillonnage (SUB-SPL, MSQ; SUB-SPL, SPL) du symbole de données modulé reçu pour y masquer un ou plusieurs des bits de modulation, de telle manière que l'étape de corrélation du symbole de données reçu sous-échantillonné n'est réalisée que pour les bits de modulation non masqués ;
le procédé étant **caractérisé en ce qu'**il comporte en outre le calcul (MAX-MAX') de l'écart entre les deux plus grandes valeurs de corrélation obtenues à l'issue de l'étape de corrélation, et la modification ou non (DEC), en fonction dudit écart ou d'une valeur calculée à partir dudit écart, du nombre de bits de modulations masqués lors de l'étape de sous-échantillonnage.

2. Procédé selon la revendication 1, comprenant en outre, suite à l'étape de corrélation, les étapes de :
- recherche du maximum de corrélation (MAX) pour identifier celle de la pluralité de séquence de code d'étalement qui module le symbole de données modulé reçu ; et de
- décodage du symbole de données modulé reçu à partir de la séquence de code d'étalement identifiée.

3. Procédé selon la revendication 1, dans lequel la modification du nombre de bits de modulation masqués lors de l'étape de sous-échantillonnage est une augmentation du nombre de bits masqués lorsque ledit écart ou la valeur calculée à partir dudit écart est supérieur à un seuil et une réduction du nombre de bits masqués lorsque ledit écart ou la valeur calculée à partir dudit écart est inférieur à un seuil.

4. Procédé selon la revendication 1, dans lequel la modification du nombre de bits masqués lors de l'étape de sous-échantillonnage comprend la sélection d'un masque de sous-échantillonnage parmi une pluralité de masques de sous-échantillonnage (M0-M3).

5. Procédé selon l'une des revendications 1 à 4, dans lequel lors de l'étape de corrélation du symbole de données reçu sous-échantillonné, la corrélation avec l'une de la pluralité de séquences de code d'étalement consiste à ne réaliser une multiplication d'un bit de modulation du symbole de données reçu sous-échantillonné avec un bit de modulation correspondant de la séquence de code d'étalement que pour les bits de modulation non masqués.

6. Procédé selon l'une des revendications 1 à 5, dans lequel la modification du nombre de bits de modulation masqués lors de l'étape de sous-échantillonnage est réalisée au moyen d'une régulation en boucle fermée (LUT, R, C) permettant de respecter un taux d'erreur binaire cible (BER).

7. Procédé selon l'une des revendications 1 à 6, dans lequel les bits de modulation du symbole modulé reçu sont enregistrés dans un registre de taille fixe (3) avant l'étape de sous-échantillonnage (SUB-SPL).

8. Procédé selon l'une des revendications 1 à 6, dans lequel les bits de modulation non masqués du symbole modulé reçu sont enregistrés dans un registre de taille variable (30) après l'étape de sous-échantillonnage (SUB-SPL).

9. Unité de démodulation (1, 10) d'un symbole de données reçu par un récepteur d'un système de communication, le symbole de données étant modulé par une séquence de code d'étalement choisie parmi une pluralité de séquences de code d'étalement (R0-R15) quasi-orthogonales entre elles pour différencier le symbole d'autres symboles de données, et reçu sous la forme d'un ensemble de bits de modulation,
l'unité comprenant une étage de corrélation (CORR) du symbole de données modulé reçu avec chacune de la pluralité de séquence de code d'étalement (R0-R15), et en amont de l'étage de corrélation un étage de sous-échantillonnage (SUB-SPL, MSQ; SUB-SPL, SPL) du symbole de données modulé reçu configuré pour masquer un ou plusieurs des bits de modulation, de telle manière que la corrélation du symbole de données reçu sous-échantillonné n'est réalisée que pour les bits de modulation non masqués,
l'unité étant **caractérisée en ce qu'**elle comprend en outre un module (MAX-MAX') configuré pour calculer (MAX-MAX') l'écart entre les deux plus grandes valeurs de corrélation obtenues à l'issue de l'étape de corrélation, et un module (DEC) configuré pour modifier ou non (DEC), en fonction dudit écart ou d'une valeur calculée à partir dudit écart, le nombre de bits de modulations masqués lors par l'étage de sous-échantillonnage.

10. Unité de démodulation selon la revendication 9, comprenant un registre de taille fixe (3) en amont de l'étage de sous-échantillonnage (SUB-SPL, MSQ) pour l'enregistrement des bits de modulation du symbole modulé reçu.

11. Unité de démodulation selon la revendication 9, comprenant un registre de taille variable (30) intercalé entre l'étage de sous-échantillonnage (SUB-SPL, SPL) et l'étage de corrélation (CORR) pour l'enregistrement des bits de modulation non masqués du symbole modulé reçu.

12. Récepteur pour système de communication comprenant une unité de démodulation (1, 10) selon l'une des revendications 9 à 11.

## Patentansprüche

1. Verfahren zum Dekodieren eines Datensymbols, welches von einem Signal getragen wird, welches von einem Empfänger eines Kommunikationssystems empfangen wird, wobei das Datensymbol durch eine Spreizcode-Sequenz moduliert wird, welche aus einer Mehrzahl von Spreizcode-Sequenzen (R0-R15) ausgewählt wird, welche untereinander quasi-orthogonal sind, um das Symbol von anderen Datensymbolen zu unterscheiden, und welches in Form einer Modulations-Bitmenge empfangen wird,
das Verfahren umfassend:
einen Schritt eines Korrelierens (CORR) des empfangenen modulierten Datensymbols mit jeder aus der Mehrzahl von Spreizcode-Sequenzen (R0-R15);
vor dem Schritt des Korrelierens, einen Schritt einer Unter-Abtastung (SUB-SPL, MSQ; SUB-SPL, SPL) des empfangenen modulierten Datensymbols, um so ein oder mehrere Modulationsbits derart zu maskieren, dass der Schritt des Korrelierens des empfangenen unter-abgetasteten Datensymbols nur für die nicht-maskierten Bits durchgeführt wird;
wobei das Verfahren **dadurch gekennzeichnet ist, dass** es ferner die Berechnung (MAX-MAX') des Abstands zwischen den beiden größten Korrelationswerten umfasst, welche am Ende des Korrelationsschritts erhalten werden, und die Modifikation oder nicht (DEC), abhängig von dem Abstand oder einem ausgehend von diesem Abstand berechneten Wert, der Anzahl der maskierten Modulationsbits während des Schritts der Unter-Abtastung.

2. Verfahren nach Anspruch 1, ferner umfassend im Anschluss an den Schritt des Korrelierens, die Schritte eines:
- Suchens nach dem Maximum der Korrelation (MAX), um diejenige der Mehrzahl von Spreizcode-Sequenzen zu identifizieren, die das empfangene modulierte Datensymbol moduliert; und eines
- Dekodieren des empfangenen modulierten Datensymbols ausgehend von der identifizierten Spreizcode-Sequenz.

3. Verfahren nach Anspruch 1, wobei die Modifikation der Anzahl von maskierten Modulationsbits während des Schritts der Unter-Abtastung eine Erhöhung der Anzahl von maskierten Bits ist, während der Abstand oder der ausgehend von dem Abstand berechnete Wert größer als ein Schwellenwert ist, und eine Verringerung der Anzahl von maskierten Bits ist, während der Abstand oder der ausgehend von dem Abstand berechnete Wert kleiner als ein Schwellenwert ist.

4. Verfahren nach Anspruch 1, wobei die Modifikation der Anzahl von maskierten Bits während des Schritts der Unter-Abtastung das Auswählen einer Unter-Abtastmaske aus einer Mehrzahl von Unter-Abtastmasken (M0-M3) umfasst.

5. Verfahren nach einem der Ansprüche 1 bis 4, wobei während des Schritts des Korrelierens des empfangenen unter-abgetasteten Datensymbols die Korrelation mit einer aus der Mehrzahl von Spreizcode-Sequenzen daraus besteht, eine Multiplikation eines Modulationsbits des empfangenen unter-abgetasteten Datensymbols mit einem entsprechenden Modulationsbit der Spreizcode-Sequenz nur für die nicht-maskierten Modulationsbits durchzuführen.

6. Verfahren nach einem der Ansprüche 1 bis 5, wobei die Modifikation der Anzahl von maskierten Modulationsbits während des Schritts der Unter-Abtastung mittels eines geschlossenen Regelkreises (LUT, R, C) durchgeführt wird, wodurch ein Respektieren einer binären Soll-Fehlerrate (BER) ermöglicht wird.

7. Verfahren nach einem der Ansprüche 1 bis 6, wobei die Modulationsbits des empfangenen modulierten Symbols vor dem Schritt der Unter-Abtastung (SUB-SPL) in einem Register mit fester Größe (3) registriert werden.

8. Verfahren nach einem der Ansprüche 1 bis 6, wobei die nicht-maskierten Modulationsbits des empfangenen modulierten Symbols nach dem Schritt der Unter-Abtastung (SUB-SPL) in einem Register mit variabler Größe (30) registriert werden.

9. Demodulatoreinheit (1,10) für ein Datensymbol, welches von einem Empfänger eines Kommunikationssystems empfangen wird, wobei das Datensymbol durch eine Spreizcode-Sequenz moduliert ist, welche aus einer Mehrzahl von Spreizcode-Sequenzen (R0-R15) ausgewählt ist, welche untereinander quasi-orthogonal sind, um das Symbol von anderen Datensymbolen zu unterscheiden, und welches in der Form einer Modulations-Bitmenge empfangen wird,
die Einheit umfassend eine Korrelationsstufe (CORR) für das empfangene modulierte Datensymbol mit jeder aus der Mehrzahl von Spreizcode-Sequenzen (R0-R15), und vor der Korrelationsstufe eine Unter-Abtaststufe (SUB-SPL, MSQ; SUB-SPL, SPL) für das empfangene modulierte Datensymbol, welche dazu eingerichtet ist, ein oder mehrere Modulationsbits derart zu maskieren, dass die Korrelation des empfangenen unter-abgetasteten Datensymbols nur für die nicht-maskierten Bits durchgeführt wird;
wobei die Einheit **dadurch gekennzeichnet ist, dass** sie ferner ein Modul (MAX-MAX') umfasst, welches dazu eingerichtet ist, den Abstand zwischen den beiden größten Korrelationswerten zu berechnen (MAX-MAX'), welche am Ende des Korrelationsschritts erhalten werden, sowie ein Modul (DEC), welches dazu eingerichtet ist, abhängig von dem Abstand oder einem ausgehend von diesem Abstand berechneten Wert, die Anzahl der maskierten Modulationsbits während des Schritts der Unter-Abtastung zu modifizieren oder nicht (DEC).

10. Demodulatoreinheit nach Anspruch 9, umfassend ein Register mit fester Größe (3) vor der Unter-Abtaststufe (SUB-SPL, MSQ) zum Registrieren von Modulationsbits des empfangenen modulierten Symbols.

11. Demodulatoreinheit nach Anspruch 9, umfassend ein Register mit variabler Größe (30), welches zwischen der Unter-Abtaststufe (SUB-SPL, SPL) und der Korrelationsstufe (CORR) eingefügt ist, um die nicht-maskierten Modulationsbits des empfangenen modulierten Symbols zu registrieren.

12. Empfänger für ein Kommunikationssystem, umfassend eine Demodulatoreinheit (1, 10) nach einem der Ansprüche 9 bis 11.

## Claims

1. A method for decoding a data symbol carried by a signal received by a receiver of a communication system, the data symbol being modulated by a spread code sequence selected from a plurality of spread code sequences (R0-R15) being quasi-orthogonal to each other to differentiate the symbol from other data symbols, and being received as a set of modulation bits, the method comprising:
a step of correlating (CORR) the modulated data symbol received with each of the plurality of spread code sequences (R0-R15);
before the step of correlating, a step of sub-sampling (SUB-SPL, MSQ; SUB-SPL, SPL) the modulated data symbol received to mask one or more of the modulation bits therein, such that the step of correlating the sub-sampled data symbol received is carried out only for the non-masked modulation bits;
the method being **characterized in that** it further includes the step of calculating (MAX-MAX') the deviation between the two greatest correlation values obtained at the end of the step of correlating, and of modifying or not (DEC), depending on said deviation or on a value calculated from said deviation, the number of modulation bits masked during the step of sub-sampling.

2. The method according to claim 1, further comprising, subsequent to the step of correlating, the steps of:
- searching for the correlation maximum (MAX) to identify which one of the plurality of spread code sequences modulates the modulated data symbol received; and
- decoding the modulated data symbol received from the identified spread code sequence.

3. The method according to claim 1, wherein modifying the number of masked modulation bits during the step of sub-sampling consists in increasing the number of masked bits when said deviation or value calculated from said deviation is higher than a threshold and reducing the number of masked bits when said deviation or value calculated from said deviation is lower than a threshold.

4. The method according to claim 1, wherein modifying the number of masked bits during the step of sub-sampling comprises selecting a sub-sampling mask from a plurality of sub-sampling masks (M0-M3).

5. The method according to one of claims 1 to 4, wherein during the step of correlating the sub-sampled data symbol received, correlating with one of the plurality of spread code sequences consists in carrying out a multiplication of a modulation bit of the sub-sampled data symbol received with a corresponding modulation bit of the spread code sequence only for the non-masked modulation bits.

6. The method according to one of claims 1 to 5, wherein modifying the number of modulation bits masked during the step of sub-sampling is performed by means of a closed loop control (LUT, R, C) to meet a target bit error rate (BER).

7. The method according to one of claims 1 to 6, wherein the modulation bits of the modulated symbol received are recorded in a fixed-size register (3) before the step of sub-sampling (SUB-SPL).

8. The method according to one of claims 1 to 6, wherein the non-masked modulation bits of the modulated symbol received are recorded in a variable-size register (30) after the step of sub-sampling (SUB-SPL).

9. A demodulation unit (1, 10) of a data symbol received by a receiver of a communication system, the data symbol being modulated by a spread code sequence selected from a plurality of spread code sequences (R0-R15) being quasi-orthogonal to each other to differentiate the symbol from other data symbols, and being received as a set of modulation bits,
the unit comprising a stage of correlating (CORR) the modulated data symbol received with each of the plurality of spread code sequences (R0-R15), and upstream said stage of correlating, a stage of sub-sampling (SUB-SPL, MSQ; SUB-SPL, SPL) the modulated data symbol received configured to mask one or more of the modulation bits, such that the correlation of the sub-sampled data symbol received is carried out only for the non-masked modulation bits,
the unit being **characterized in that** it further comprises a module (MAX-MAX') configured to calculate (MAX-MAX') the deviation between the two greatest correlation values obtained at the end of the correlating step, and a module (DEC) configured to modify or not (DEC), depending on said deviation or on a value calculated from said deviation, the number of modulation bits masked by the stage of sub-sampling.

10. The demodulation unit according to claim 9, comprising a fixed-size register (3) upstream the stage of sub-sampling (SUB-SPL, MSQ) for recording modulation bits of the modulated symbol received.

11. The demodulation unit according to claim 9, comprising a variable-size register (30) interposed between the stage of sub-sampling (SUB-SPL, SPL) and the stage of correlating (CORR) for recording non-masked modulation bits of the modulated symbol received.

12. A receiver for a communication system comprising a demodulation unit (1, 10) according to one of claims 9 to 11.
